# EUROPEAN PATENT APPLICATION

(11) **EP 4 679 257 A1**
(43) Date of publication of application: **14.01.2026**
(21) Application number: 25170429.2
(22) Date of filing: 14.04.2025
(51) Int. Cl.: G06F 8/30, G06F 40/20, G06N 3/0475, G06F 8/41, G06F 16/3329, G06F 8/33

(54) **CONTEXT PROVISIONING SYSTEM FOR CODE GENERATION WITH LARGE LANGUAGE MODEL**

(30) Priority: 08.07.2024 US 202418766338
(71) Applicant: SAP SE, 69190 Walldorf (DE)
(72) Inventor: Kunz, David, 69190 Walldorf (DE)
(74) Representative: Müller-Boré & Partner Patentanwälte PartG mbB

(57) **Abstract**

In an example embodiment, an iterative tools-based solution is utilized wherein a listing of possible tools for context gathering may be provided as input to an LLM along with a user prompt, by a host program. The LLM then generates text that invokes one or more of the tools when executed by the host program. When the host program executes the generated text from the LLM, context is gathered in accordance with the tool or tools selected by the LLM. This context can then be fed back into the LLM. This process can continuously iterate until the LLM has enough context to generate a response to the initial user prompt itself.

## Description

### TECHNICAL FIELD

This document generally relates to computer systems. More specifically, this document relates to use of large language models.

### BACKGROUND

A large language model (LLM) refers to an artificial intelligence (AI) system that has been trained on an extensive dataset to understand and generate human language. These models are designed to process and comprehend natural language in a way that allows them to answer questions, engage in conversations, generate text, and perform various language-related tasks.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system or automatically generating software code, in accordance with an example embodiment.
Figure 2 is a block diagram illustrating a system for automatically generating software programming code, in accordance with an example embodiment.
Figure 3 is a flow diagram illustrating a method for performing a computer task, in accordance with an example embodiment.
Figure 4 is a flow diagram illustrating a method for generating computer code, in accordance with an example embodiment.
Figure 5 is a block diagram illustrating a software architecture, in accordance with an example embodiment.
Figure 6 illustrates a diagrammatic representation of a machine in the form of a computer system within which a set of instructions may be executed for causing the machine to perform any one or more of the methodologies discussed herein.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

LLMs are highly capable of generating text and even computer code (to be compiled into running software). LLMs, however, are limited due to the fact that their existing knowledge is limited by their training data. The result is that the output is not always correct. There are ways to reduce the impact of this limitation, such as by crafting appropriate system messages, adding external data through generated function invocations, or fine-tuning the foundation models, but these solutions are not perfect and still result in erroneous output. These limitations are amplified when the LLM is outputting compilable computer code, where it is not only important that the substance of the output be correct but also that the syntax and formatting be correct.

Indeed, certain types of compilable computer code may be even more difficult for an LLM to generate correctly, due to a number of factors, such as the compilable computer code type being one that is proprietary or at least partially proprietary (and thus in a format that is difficult to train an LLM on), and the compilable computer code type being one that is difficult to change once it is generated.

One of the biggest technical challenges involved in using LLMs for code generation is providing the correct context. LLMs operate better when they are not just provided with bare requests for generation (e.g., "generate me some code to do X") but are also provided with some contextual information, such as the location of the code in which the newly generated code is to be placed, related files with important definitions, etc. The more context the LLM has for a request, the better the reliability of code generation will be. If one were to hypothetically provide every code snippet in an entire application's worth of code to the LLM, then the resultant code generated would be very reliable.

The problem is that LLMs typically have a limit on how much context is able to be provided with a request (e.g., a maximum number of input tokens), and even in cases where such limits do not exist or where the limits are not quite reached, adding additional context adds to inference costs (either in money or in speed, for example). Thus, while it is important to provide relevant context for a request to an LLM, it is also important not to provide irrelevant context. Identifying relevant context, however, can be technically challenging.

One solution would be to identify all open files and then send the closest (e.g., using Jaccard distance) snippets of all open files with the current surrounding code. This method, however, would fail if relevant files are not open. This also necessitates some level of hard-coded rules that are executed to find the open files and measure the closeness of the files.

Another solution would be a fully manual approach, where a user who is requesting the text be generated adds in variables to the user prompt indicating how to obtain additional context, but such a solution is cumbersome for users to utilize.

The present disclosure describes two different techniques that can be used to aid in the gathering and use of context as input to an LLM. These two different techniques can be used as alternatives of one another, or can be used in combination.

In an example embodiment, an iterative tools-based solution is utilized wherein a listing of possible tools for context gathering may be provided as input to an LLM along with a user prompt, by a host program. The LLM then generates text that invokes one or more of the tools when executed by the host program. When the host program executes the generated text from the LLM, context is gathered in accordance with the tool or tools selected by the LLM. This context can then be fed back into the LLM. This process can continuously iterate until the LLM has enough context to generate a response to the initial user prompt itself.

LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome the vanishing gradient problem in traditional RNNs, which can make it difficult to learn long-term dependencies in sequential data.

LSTMs comprise a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modeling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information, and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. GAN is a supervised machine learning model that has two sub-models: a generator model that is trained to generate new examples, and a discriminator model that tries to classify examples as either real or generated. The two models are trained together in an adversarial manner (using a zero-sum game according to game theory) until the discriminator model is fooled roughly half the time, which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, though a clever property of the GAN architecture is that the training of the generative model is framed as a supervised learning problem.

The two models, the generator and discriminator, are trained together. The generator generates a batch of samples, and these, along with real examples from the domain, are provided to the discriminator and classified as real or fake.

The discriminator is then updated to get better at discriminating real and fake samples in the next round, and importantly, the generator is updated based on how well, or not, the generated samples fooled the discriminator.

In another example embodiment, the GAI model is a Variational AutoEncoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naive Bayes classifier.

The present solution works with any type of GAI model, although an implementation that specifically is used with a GPT model will be described.

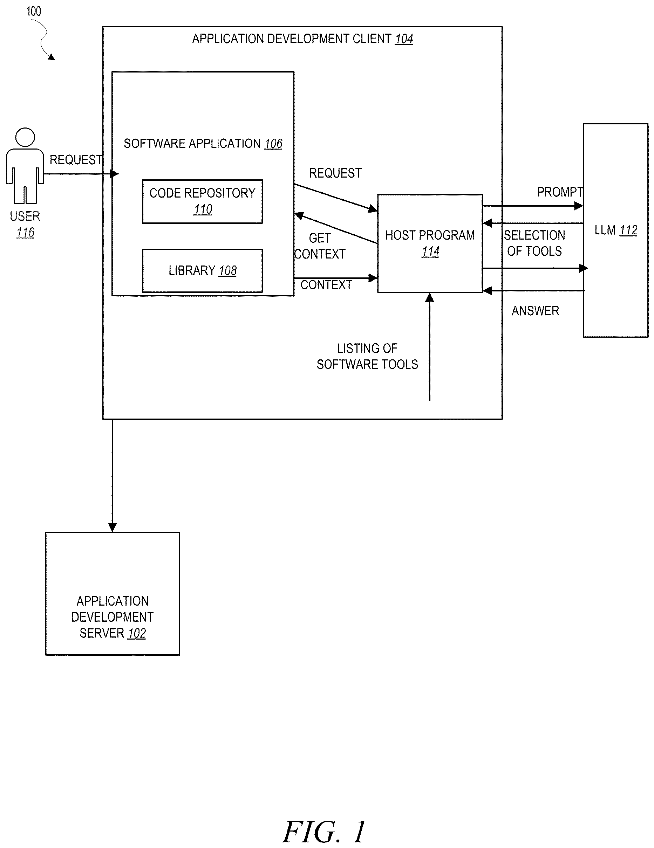

**Figure** 1 is a block diagram illustrating a system 100 for automatically generating software code, in accordance with an example embodiment.

Here, an application development server 102 provides a server allowing one or more clients, such as application development client 104, to create and manage computer code. In some example embodiments, the computer code is generated for use in a data model infrastructure such as Core Data Services (CDS) from SAP SE of Walldorf, Germany. CDS enables service definitions and data models to be declaratively captured in plain object notations. CDS models are typically written in CDS language and then compiled.

The application development client 104 is generally used to control application development server 102 to create an application using a first programming language, and the application development client 104 may be where the user creates a software application 106 (although in such cases it would commonly also be stored at the application development server 102 as a backup and/or to allow other users to edit it). This aspect is not intended to be limiting, however, and in some example embodiments, the software application 106 is created exclusively on the application development server 102. The software application 106 which is essentially in programming language form until it is compiled or interpreted, may generally comprise a library 108 comprising programming language-specific files. For example, if the user wishes to use to application development client 104 to create an application in JavaScript, the programming language-specific files are JavaScript libraries.

Code created for the software application 106 may be stored in a code repository 110. This may comprise, for example, code written by a software developer and/or code that is generated by an LLM 112. When the software application 106 is compiled, this basically means that the files in the code repository 110 and the library 108 are compiled.

A host program 114 manages the iterative solution described herein. More specifically, the host program 114 takes as input a request from a user 116 via software application 106, provided via the application development client 104. This request may be, for example, a request to describe the purpose of a function defined in code, or to invoke the function at a particular place in the code, etc. The host program 114 may also access a listing of tools available for execution by the host program 114 to add additional context to the request from the user 116.

The listing of tools may contain, for each tool, the syntax to specify the context (which may depend on parameters), a description of the context, and way to invoke it manually. Thus, an example could be:

```
 tools = [
 {
      "name": "file",
      "description": "Provides the content of a particular file"
      "exampleSyntax": "file/srv/myfile.js"
 },
 {
      "name": "editorContext"
      "description": "get current editor context like open files, cursor location,
 etc.",
      "exampleSyntax": "editor Context()"
 }
 ]
```

Thus, in some example embodiments, the user may manually specify one or more of the tools in the listing of tools as part of the request, which can be used in conjunction with a selection of one or more of the tools in the listing of tools that the LLM 112 will select. More specifically, the host program 114 generates a prompt to the LLM 112 that comprises a system prompt having instructions to generate an invocation of one or more tools from a, listing of tools, along with the listing of tools and the user's request. The system prompt may be, for example:

```
Given this list of available tools and the user message
 Where some tool invocations can already happen,
 Provide a list of tool invocations with syntax:
 ‴tools
 myTool(myToolArgument)
 myOtherTool(MyOtherToolArgument1, myOtherToolArgument2)
 ‴
 If you know the answer, answer with:
 ‴answer
 This is the final answer
 ‴
```

In this example, the instructions also comprise instructions to answer with the text "‴final" if it is the final answer to the user's request. This allows the host program 114 to iterate with the LLM 112 multiple times, with each iteration getting closer to a final answer. More specifically, if the host program 114 receives a response from the LLM 112 that does not comprise the phrase "‴answer" then it knows it should resubmit the prompt again with additional context gathered by the host program 114.

Thus, as an example, the user may make the following request in the application development client 104 when creating a piece of computer code: Invoke function foo in my current location
File(foo.js)

This specifies two things. First, it indicates a natural language request to invoke the function foo (from a current location of computer code being edited in the application development client 104 ). Second, it indicates that the tool "File" should be run to provide context for the request.

In response, the host program 114 can then create a prompt as follows:

```
     Given this list of available tools and the user message
     Where some tool invocations can already happen,
     Provide a list of tool invocations with syntax:
     ‴tools
     myTool(myToolArgument)
     myOtherTool(MyOtherToolArgument1, myOtherToolArgument2)
     ‴
     If you know the answer, answer with:
     ‴answer
     This is the final answer
     ‴
     tools = [
     {
             "name": "file",
             "description": "Provides the content of a particular file"
             "exampleSyntax": "file/srv/myfile.js"
     {
             "name": "editorContext"
             "description": "get current editor context like open files, cursor
     location, etc.",
             "exampleSyntax": "editor Context()"
     }
     ]
     Invoke function foo in my current location
     File(foo.js)
```

The LLM 112 can then respond with a selection of tools to call. This comprises the tool(s) specified by the user (here "file"), as well as one or more tools selected by the LLM based on the natural language request and the context comprised in the prompt. Thus, the response could be:

```
 ‴tools
 File(foo.js)
 editorContext()
```

Here, the editorContext tool is selected by the LLM 112 since the user specified that they wanted something done "in my current location" and the LLM 112 knows from the listing of tools that the editorContext tool provides this functionality.

Since there is no indication that the LLM 112 has generated the final answer, the host program 114 then calls the two functions (File(foo.js) and editorContext()) to obtain context. This context may be as follows:

```
 function foo (intl, int2, int3) {
      Return int1 + int2 + int3
 }
 editorContext: {
      currentFile: "the/current/location.js,
      cursorPosition: [10, 5]
```

The host program 114 may then resubmit the prompt to the LLM 112, with the additional context added, for example:

```
     Given this list of available tools and the user message
     Where some tool invocations can already happen,
     Provide a list of tool invocations with syntax:
     ‴tools
     myTool(myToolArgument)
     myOtherTool(MyOtherToolArgument1, myOtherToolArgument2)
     ‴
     If you know the answer, answer with:
     ‴answer
     This is the final answer
     ‴
     tools = [
     {
      "name": "file",
      "description": "Provides the content of a particular file"
      "exampleSyntax": "file(srv/myfile.js)"
     },
     {
      "name": "editorContext"
      "description": "get current editor context like open files, cursor location,
     etc.",
      "exampleSyntax": "editor Context()"
     }
     ]
     Invoke function foo in my current location
     File(foo.js)
      Return int1 + int2 + int3
     }
     editorContext: {
      currentFile: "the/current/location.js,
      cursorPosition: [10, 5]
     }
```

The LLM 112 may then determine that still additional context (such as surrounding code) is needed, and may issue the following response:

```
 ‴tools
 File(the/current/location.js)
 ‴
```

Since there is no indication that the LLM 112 has generated the final answer, the host program 114 then calls the function File(the/current/location.js) to obtain additional context. The additional context may be: (add colon here?)
Const x = 1
Const y = 2
Const z = 3

The host program 114 may then resubmit the prompt to the LLM 112, with the additional context added, for example:
Given this list of available tools and the user message
Where some tool invocations can already happen,
Provide a list of tool invocations with syntax:

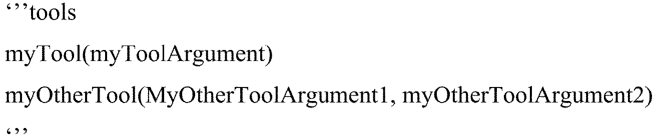

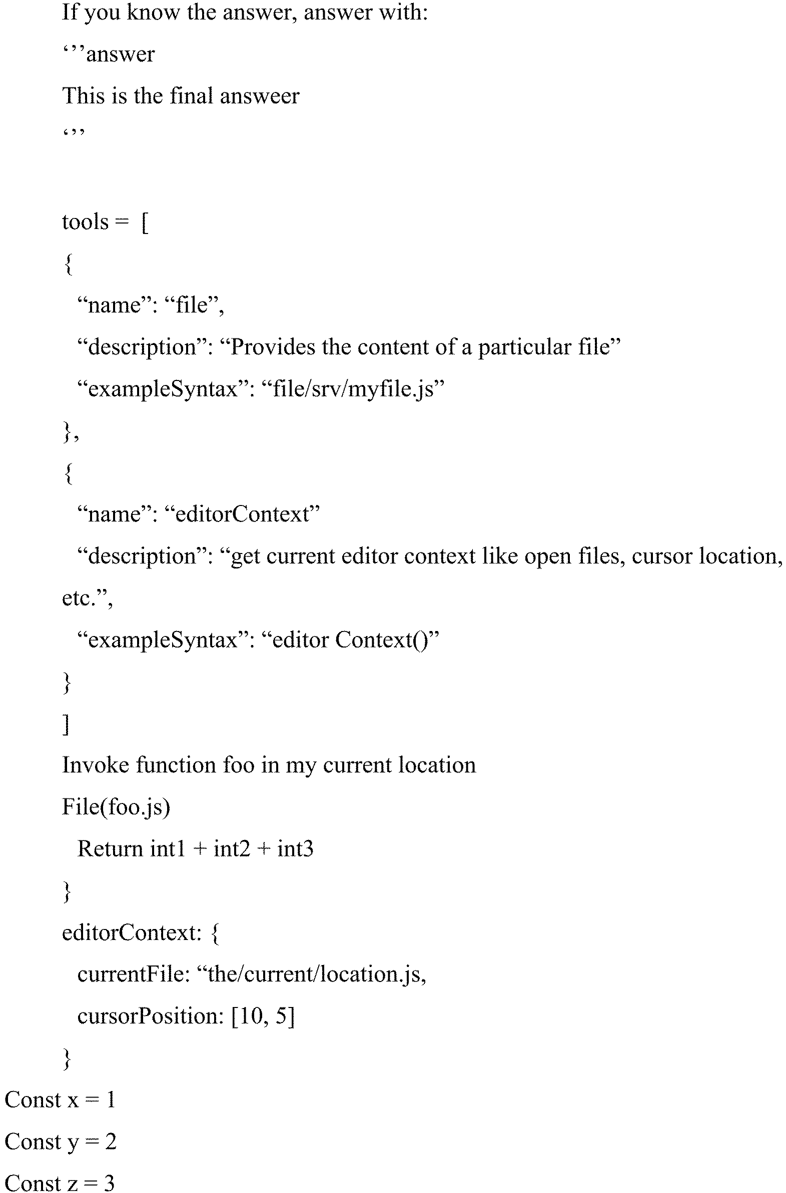

Here, the LLM 112 may then have enough context to generate a final answer, which it may present as follows:

```
 ‴answer
 Const x = foo(1, 2, 3)
 ‴
```

Since this has been indicated as the final answer, the host program 114 may stop iterating and present the final answer to the application development client 104.

As mentioned before, the user is able to make function calls from within the user prompt itself, allowing the user to specify certain functions be called rather than relying on the LLM 112 to select those functions automatically. Thus, the user remains in full control if they do not wish to delegate everything to the LLM 112.

Furthermore, in additional example embodiments, variables can be added to the prompts as well, either by the user or by the LLM 112, or a combination thereof. This may be useful if, for example, the LLM 112 needs to obtain a result of a previous iteration in generating output in a current iteration. For example:

```
 Tools:
 search_file_name (<search_term>)
 get_file_content(<file_name>)
 
```

In a naive way, the LLM 112 could first try to invoke the tool search_file_name (...) for a particular search term and only once it got the file name, it would retrieve the file content with get_file_content(<file_name>) in a second iteration. In an example embodiment, one can combine both with variables, such as:
x = search_file_name("some search term") get_file_content(x)

With this, the LLM invokes both at the same time. That would save tokens (and therefore time and money).

Other embodiments are foreseen as well, such as by introducing more basic features (if, else, arrays, loops, ...), or even use an existing programming language (e.g. JavaScript) as a tool-invocation language, which is then just executed by the host program as is.

As mentioned earlier, there are two different techniques that can be used to aid in the gathering and use of context as input to an LLM. The above is an iterative tools-based solution is utilized wherein a listing of possible tools for context gathering may be provided as input to an LLM along with a user prompt, by a host program. The second is one in which a language server is utilized.

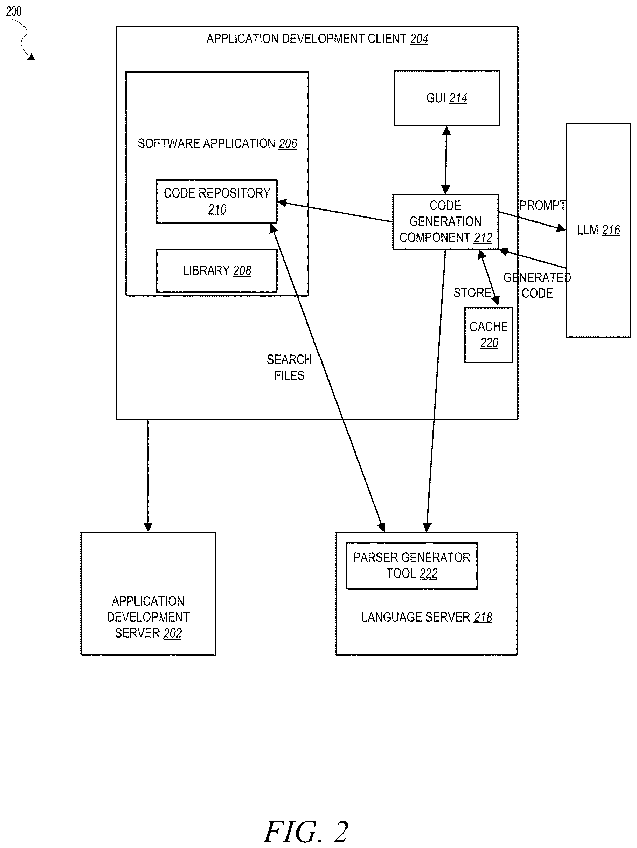

**Figure 2** is a block diagram illustrating a system 200 for automatically generating software programming code, in accordance with an example embodiment. Here, an application development server 202 provides a server allowing one or more clients, such as application development client 204, to create and manage computer code. In some example embodiments, the computer code is generated for use in a data model infrastructure such as Core Data Services (CDS) from SAP SE of Walldorf, Germany. CDS enables service definitions and data models to be declaratively captured in plain object notations. CDS models are typically written in CDS language and then compiled.

The application development client 204 is generally used to control application development server 202 to create an application using a first programming language, and the application development client 204 may be where the user creates a software application 206 (although in such cases it would commonly also be stored at the application development server 202 as a backup and/or to allow other users to edit it). This aspect is not intended to be limiting, however, and in some example embodiments, the software application 206 is created exclusively on the application development server 202. The software application 206 which is essentially in programming language form until it is compiled or interpreted, may generally comprise a library 208 comprising programming language-specific files. For example, if the user wishes to use to application development client 204 to create an application in JavaScript, the programming language-specific files are JavaScript libraries.

Code created for the software application 206 may be stored in a code repository 210. This may comprise, for example, code written by a software developer and/or code that is generated by an LLM 216. When the software application 206 is compiled, this basically means that the files in the code repository 210 and the library 208 are compiled.

A code generation component 212 manages the generation of code by the LLM 216. More specifically, when prompted to generate code (such as by a request delivered from a graphical user interface (GUI) 214), the code generation component 212 identifies the file currently being edited by the user (and optionally contextual information about the editing). For example, the user may be editing "file1.js" and the user's cursor may be in a specific location within the code of filel.js. The code generation component 212 may receive this information from the GUI 214. This information may then be passed to the language server 218, which then parses the file the user is currently editing to identify artifacts. For purposes of this disclosure, artifacts are distinctly delineated snippets of code. This may comprise, for example, functions, routines, subroutines, variables, constants, etc.

In some example embodiments, the language server 218 identifies all artifacts in the entire file that the user is currently editing. In other example embodiments, the language server 218 may utilize context information, such as the location of the user's cursor, to identify only those artifacts that are relevant to the portion of the file that the user is currently editing.

The language server 218 returns a list of relevant artifacts to the code generation component 212. The code generation component 212 then requests that the language server 218 locate code snippets in the code repository 210 that are relevant to the artifacts in the list of relevant artifacts. The language server 218 then searches the code repository 210, looking for such relevant code snippets, such as by identifying the file and location with the file where each artifact is declared, defined, or referenced. This comprises searching through closed files (files not currently opened by the user).

The identified files and locations are then passed back to the code generation component 212, which generates a request for code generation to the LLM 216 and comprises the contents of the identified files and locations, as well as the metadata (e.g., location), as context for that code generation request. The LLM 216 then uses this context to generate code, which is returned to the code generation component 212 and eventually stored in the code repository 210.

The result is that the LLM 216 generates more relevant computer code, due to the presence of the relevant context with the code generation request.

In some example embodiments, this process may be repeated in an iterative fashion. Specifically, whenever relevant code snippets are found for a particular artifact, it is possible that that relevant code will have artifacts of its own that would benefit from context. Thus, for example, a function "foo" may be referenced in a file "file1.js" being edited by the user. A first iteration may retrieve all code snippets from other files where "foo" was declared, defined, or referenced, but it may be that, for example, "file2.js" contains a definition for foo that references a variable "var1" that is not defined in either file1.js or file2.js. Thus, a subsequent iteration would allow the language server to identify code snippets relevant to "var1" (as well as other undefined artifacts found in the prior iteration). This iterative process can be repeated until some condition is met. In some example embodiments, this interactive process may stop at some predefined maximum number of iterations (e.g., 10 iterations) in order to prevent an overwhelming amount of contextual information for the LLM to handle.

In an example embodiment, the identified files and locations may be stored in a cache 220. This improves performance of the overall system 200 because it allows the code generation component 212 to retrieve identified files and locations from the cache 220 without needing to use the language server 218 to search the entire code repository 210 on subsequent requests for code for the same edited file.

In an example embodiment, the language server 218 may utilize a parser generator tool 222 to parse the computer code in which it is trying to identify artifacts (e.g., the current file or snippet being edited by the user). The parser generator tool 222 may represent the computer code as an abstract syntax tree, which is a more structured way of representing artifacts in source code than the plain text.

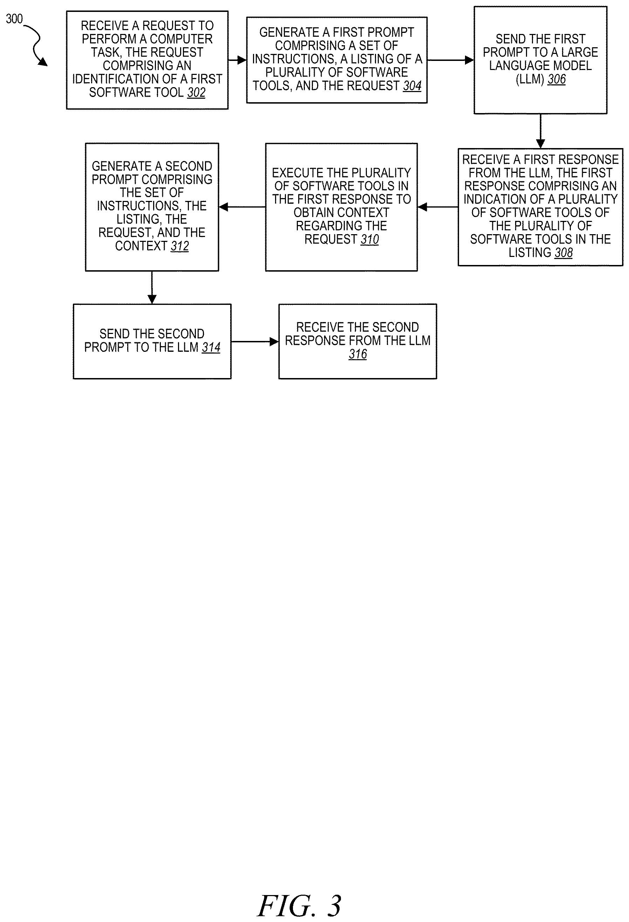

**Figure 3** is a flow diagram of an example method 300 for performing a computer task, in accordance with an example embodiment. At operation 302, a request to perform a computer task is received, the request comprising an identification of a first software tool. At operation 304, a first prompt is generated comprising a set of instructions, a listing of a plurality of software tools, and the request. At operation 306, the first prompt is sent to a large language model (LLM).

At operation 308, a first response is received from the LLM, the first response comprising an indication of a plurality of software tools of the plurality of software tools in the listing. At operation 310, the plurality of software tools in the first response are executed to obtain context regarding the request. At operation 312, a second prompt is generated comprising the set of instructions, the listing, the request, and the context. At operation 314, the second prompt is sent to the LLM. At operation 316, the second response is received from the LLM.

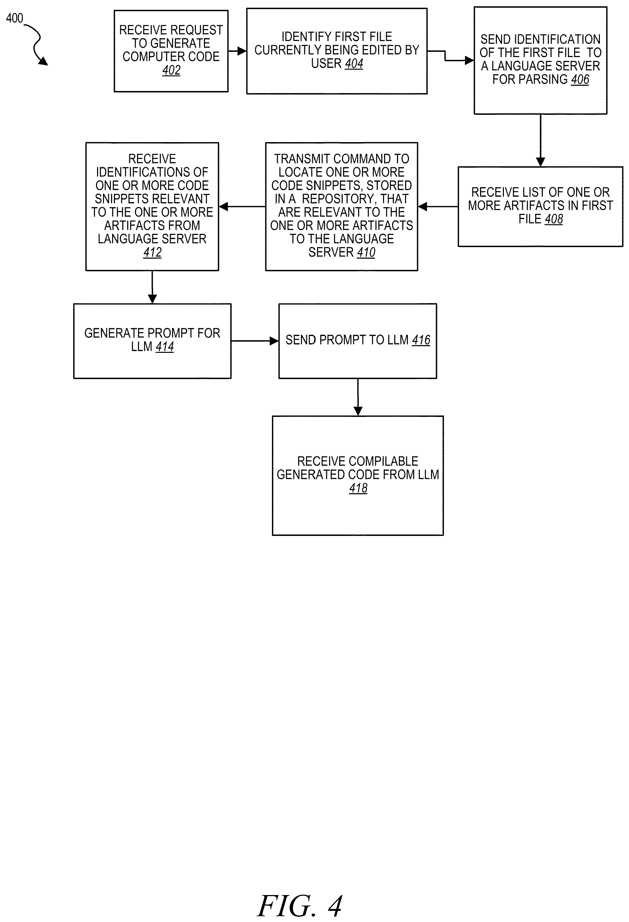

**Figure 4** is a flow diagram illustrating a method 400 for generating computer code, in accordance with an example embodiment. At operation 402, a request to generate computer code on behalf of a user is received. This request may be received from a graphical user interface operated by the user, such as a graphical user interface that is part of an application development environment and is used by the user to write and edit computer code. In some example embodiments, the request may be generated based on some explicit action by the user (e.g., the user specifying that the user wants computer code to be automatically generated). In other example embodiments, the request may be generated without such an explicit action, such as by inferring that the user would want code automatically generated. At operation 404, in response to the receiving, a first file currently being edited by the user is identified. In some example embodiments, this identifying operation additionally comprises identifying contextual information about the editing of the first file, like the location of a cursor within the first file, as displayed in the graphical user interface.

At operation 406, an identification of the first file is transmitted to a language server to cause the parsing of the first file to identify one or more artifacts in the first file are transmitted to a language server. At operation 408, a list of identified one or more artifacts is received from the language server. At operation 410, a command to locate one or more code snippets, stored in a code repository, that are relevant to the identified one or more artifacts, is transmitted to the language server. In some example embodiments, this operation may also comprise sending the contextual information about the editing of the first file as well. At operation 412, identifications of the one or more code snippets that are relevant to the identified one or more artifacts are received from the language server. In embodiments where the contextual information about the editing of the first file is sent to the language server, then these identifications may comprise only identifications of one or more code snippets that are relevant to the identified one or more artifacts based on the contextual information (such as those only relevant to the artifacts in proximity to the user's cursor as opposed to all artifacts in the first file).

At operation 414, a prompt to a large language model (LLM) is generated. The prompt comprises instructions to generate code based on using the identified one or more artifacts as context. At operation 416, the prompt is sent to the LLM. At operation 418, compilable generated code is received from the LLM.

In view of the disclosure above, various examples are set forth below. It should be noted that one or more features of an example, taken in isolation or combination, should be considered within the disclosure of this application.

Example 1 is a system comprising: at least one hardware processor; and a non-tangible computer-readable medium storing instructions that, when executed by the at least one hardware processor, cause the at least one hardware processor to perform operations comprising: receiving a request to perform a computer task, the request comprising an identification of a first software tool; generating a first prompt comprising a set of instructions, a listing of a plurality of software tools, and the request; sending the first prompt to a large language model (LLM); receiving a first response from the LLM, the first response comprising an indication of a subset of the plurality of software tools in the listing; executing the subset in the first response to obtain context regarding the request; generating a second prompt comprising the set of instructions, the listing, the request, and the context; sending the second prompt to the LLM; and receiving the second response from the LLM.

In Example 2, the subject matter of Example 1 comprises, wherein the computer task comprises generating computer code in an application development environment.

In Example 3, the subject matter of Example 2 comprises, wherein the listing of the plurality of software tools comprises, for each software tool, a name, a description, and example syntax.

In Example 4, the subject matter of Examples 2-3 comprises, wherein at least one of the plurality of software tools in the listing is a function that returns a current location in computer code that is being edited by a user with the application development environment.

In Example 5, the subject matter of Examples 1-4 comprises, wherein the indication of a subset comprises an indication of the first software tool.

In Example 6, the subject matter of Examples 1-5 comprises, wherein the second response comprises a second indication of a second subset of the plurality of software tools in the listing, and wherein the operations further comprise: executing the second subset to obtain second context regarding the request; generating a third prompt comprising the set of instructions, the listing, the request, the context, and the second context; sending the third prompt to the LLM; receiving the third response from the LLM; and utilizing the third response as a final response, based on a determination that the third response contains an indication that it is final.

In Example 7, the subject matter of Example 6 comprises, wherein the request is received from an Application Development Environment and wherein the utilizing comprises sending the third response to the application development environment.

Example 8 is a method comprising: receiving a request to perform a computer task, the request comprising an identification of a first software tool; generating a first prompt comprising a set of instructions, a listing of a plurality of software tools, and the request; sending the first prompt to a large language model (LLM); receiving a first response from the LLM, the first response comprising an indication of a subset of the plurality of software tools in the listing; executing the subset in the first response to obtain context regarding the request; generating a second prompt comprising the set of instructions, the listing, the request, and the context; sending the second prompt to the LLM; and receiving the second response from the LLM.

In Example 9, the subject matter of Example 8 comprises, wherein the computer task comprises generating computer code in an application development environment.

In Example 10, the subject matter of Example 9 comprises, wherein the listing of the plurality of software tools comprises, for each software tool, a name, a description, and example syntax.

In Example 11, the subject matter of Examples 9-10 comprises, wherein at least one of the plurality of software tools in the listing is a function that returns a current location in computer code that is being edited by a user with the application development environment.

In Example 12, the subject matter of Examples 8-11 comprises, wherein the indication of a subset comprises an indication of the first software tool.

In Example 13, the subject matter of Examples 8-12 comprises, wherein the second response comprises a second indication of a second subset of the plurality of software tools in the listing, and wherein the operations further comprise: executing the second subset to obtain second context regarding the request; generating a third prompt comprising the set of instructions, the listing, the request, the context, and the second context; sending the third prompt to the LLM; receiving the third response from the LLM; and utilizing the third response as a final response, based on a determination that the third response contains an indication that it is final.

In Example 14, the subject matter of Example 13 comprises, wherein the request is received from an Application Development Environment and wherein the utilizing comprises sending the third response to the application development environment.

Example 15 is a non-transitory machine-readable medium storing instructions which, when executed by one or more processors, cause the one or more processors to perform operations comprising: receiving a request to perform a computer task, the request comprising an identification of a first software tool; generating a first prompt comprising a set of instructions, a listing of a plurality of software tools, and the request; sending the first prompt to a large language model (LLM); receiving a first response from the LLM, the first response comprising an indication of a subset of the plurality of software tools in the listing; executing the subset in the first response to obtain context regarding the request; generating a second prompt comprising the set of instructions, the listing, the request, and the context; sending the second prompt to the LLM; and receiving the second response from the LLM.

In Example 16, the subject matter of Example 15 comprises, wherein the computer task comprises generating computer code in an application development environment.

In Example 17, the subject matter of Example 16 comprises, wherein the listing of the plurality of software tools comprises, for each software tool, a name, a description, and example syntax.

In Example 18, the subject matter of Examples 16-17 comprises, wherein at least one of the plurality of software tools in the listing is a function that returns a current location in computer code that is being edited by a user with the application development environment.

In Example 19, the subject matter of Examples 15-18 comprises, wherein the indication of a subset comprises an indication of the first software tool.

In Example 20, the subject matter of Examples 15-19 comprises, wherein the second response comprises a second indication of a second subset of the plurality of software tools in the listing, and wherein the operations further comprise: executing the second subset to obtain second context regarding the request; generating a third prompt comprising the set of instructions, the listing, the request, the context, and the second context; sending the third prompt to the LLM; receiving the third response from the LLM; and utilizing the third response as a final response, based on a determination that the third response contains an indication that it is final.

Example 21 is at least one machine-readable medium comprising instructions that, when executed by processing circuitry, cause the processing circuitry to perform operations to implement of any of Examples 1-20.

Example 22 is an apparatus comprising means to implement of any of Examples 1-20.

Example 23 is a system to implement of any of Examples 1-20.

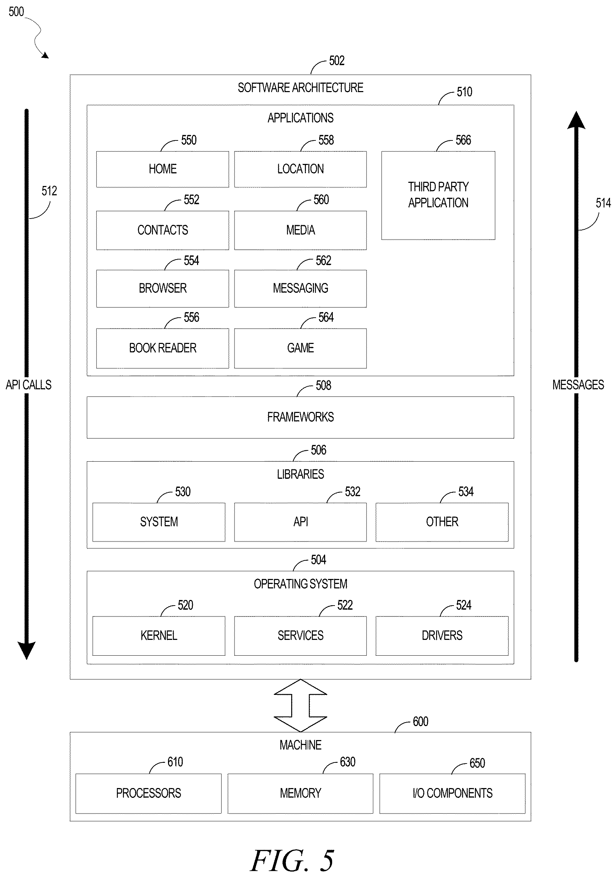

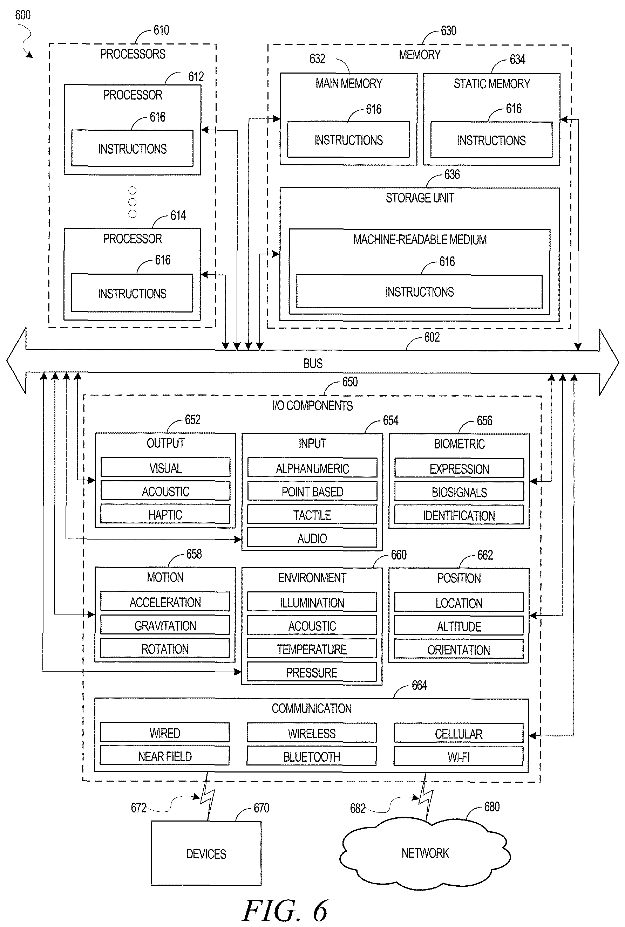

Example 24 is a method to implement of any of Examples 1-20.Figure 5 is a block diagram 500 illustrating a software architecture 502, which can be installed on any one or more of the devices described above. Figure 5 is merely a non-limiting example of a software architecture, and it will be appreciated that many other architectures can be implemented to facilitate the functionality described herein. In various embodiments, the software architecture 502 is implemented by hardware such as a machine 600 of Figure 6 that comprises processors 610, memory 630, and input/output (I/O) components 650. In this example architecture, the software architecture 502 can be conceptualized as a stack of layers where each layer may provide a particular functionality. For example, the software architecture 502 comprises layers such as an operating system 504, libraries 506, frameworks 508, and applications 510. Operationally, the applications 510 invoke API calls 512 through the software stack and receive messages 514 in response to the API calls 512, consistent with some embodiments.

In various implementations, the operating system 504 manages hardware resources and provides common services. The operating system 504 comprises, for example, a kernel 520, services 522, and drivers 524. The kernel 520 acts as an abstraction layer between the hardware and the other software layers, consistent with some embodiments. For example, the kernel 520 provides memory management, processor management (e.g., scheduling), component management, networking, and security settings, among other functionalities. The services 522 can provide other common services for the other software layers. The drivers 524 are responsible for controlling or interfacing with the underlying hardware, according to some embodiments. For instance, the drivers 524 can comprise display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 506 provide a low-level common infrastructure utilized by the applications 510. The libraries 506 can comprise system libraries 530 (e.g., C standard library) that can provide functions such as memory allocation functions, string manipulation functions, mathematic functions, and the like. In addition, the libraries 506 can comprise API libraries 532 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 506 can also comprise a wide variety of other libraries 534 to provide many other APIs to the applications 510.

The frameworks 508 provide a high-level common infrastructure that can be utilized by the applications 510, according to some embodiments. For example, the frameworks 508 provide various GUI functions, high-level resource management, high-level location services, and so forth. The frameworks 508 can provide a broad spectrum of other APIs that can be utilized by the applications 510, some of which may be specific to a particular operating system 504 or platform.

In an example embodiment, the applications 510 comprise a home application 550, a contacts application 552, a browser application 554, a book reader application 556, a location application 558, a media application 560, a messaging application 562, a game application 564, and a broad assortment of other applications, such as a third-party application 566. According to some embodiments, the applications 510 are programs that execute functions defined in the programs. Various programming languages can be employed to create one or more of the applications 510, structured in a variety of manners, such as object-oriented programming languages (e.g., Objective-C, Java, or C++) or procedural programming languages (e.g., C or assembly language). In a specific example, the third-party application 566 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 566 can invoke the API calls 512 provided by the operating system 504 to facilitate functionality described herein.

**Figure 6** illustrates a diagrammatic representation of a machine 600 in the form of a computer system within which a set of instructions may be executed for causing the machine 600 to perform any one or more of the methodologies discussed herein, according to an example embodiment. Specifically, Figure 6 shows a diagrammatic representation of the machine 600 in the example form of a computer system, within which instructions 616 (e.g., software, a program, an application, an applet, an app, or other executable code) for causing the machine 600 to perform any one or more of the methodologies discussed herein may be executed. For example, the instructions 616 may cause the machine 600 to execute the method 300 of Figure 3 and/or the method 400 of Figure 4. Additionally, or alternatively, the instructions 616 may implement Figures 1-4 and so forth. The instructions 616 transform the general, non-programmed machine 600 into a particular machine 600 programmed to carry out the described and illustrated functions in the manner described. In alternative embodiments, the machine 600 operates as a standalone device or may be coupled (e.g., networked) to other machines. In a networked deployment, the machine 600 may operate in the capacity of a server machine or a client machine in a server-client network environment, or as a peer machine in a peer-to-peer (or distributed) network environment. The machine 600 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 616, sequentially or otherwise, that specify actions to be taken by the machine 600. Further, while only a single machine 600 is illustrated, the term "machine" shall also be taken to comprise a collection of machines 600 that individually or jointly execute the instructions 616 to perform any one or more of the methodologies discussed herein.

The machine 600 may comprise processors 610, memory 630, and I/O components 650, which may be configured to communicate with each other such as via a bus 602. In an example embodiment, the processors 610 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may comprise, for example, a processor 612 and a processor 614 that may execute the instructions 616. The term "processor" is intended to comprise multi-core processors that may comprise two or more independent processors (sometimes referred to as "cores") that may execute instructions 616 contemporaneously. Although Figure 6 shows multiple processors 610, the machine 600 may comprise a single processor 612 with a single core, a single processor 612 with multiple cores (e.g., a multi-core processor 612), multiple processors 612, 614 with a single core, multiple processors 612, 614 with multiple cores, or any combination thereof.

The memory 630 may comprise a main memory 632, a static memory 634, and a storage unit 636, each accessible to the processors 610 such as via the bus 602. The main memory 632, the static memory 634, and the storage unit 636 store the instructions 616 embodying any one or more of the methodologies or functions described herein. The instructions 616 may also reside, completely or partially, within the main memory 632, within the static memory 634, within the storage unit 636, within at least one of the processors 610 (e.g., within the processor's cache memory), or any suitable combination thereof, during execution thereof by the machine 600.

The I/O components 650 may comprise a wide variety of components to receive input, provide output, produce output, transmit information, exchange information, capture measurements, and so on. The specific I/O components 650 that are comprised in a particular machine will depend on the type of machine. For example, portable machines such as mobile phones will likely comprise a touch input device or other such input mechanisms, while a headless server machine will likely not comprise such a touch input device. It will be appreciated that the I/O components 650 may comprise many other components that are not shown in Figure 6. The I/O components 650 are grouped according to functionality merely for simplifying the following discussion, and the grouping is in no way limiting. In various example embodiments, the I/O components 650 may comprise output components 652 and input components 654. The output components 652 may comprise visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 654 may comprise alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 650 may comprise biometric components 656, motion components 658, environmental components 660, or position components 662, among a wide array of other components. For example, the biometric components 656 may comprise components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 658 may comprise acceleration sensor components (e.g., accelerometer), gravitation sensor components, rotation sensor components (e.g., gyroscope), and so forth. The environmental components 660 may comprise, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 662 may comprise location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 650 may comprise communication components 664 operable to couple the machine 600 to a network 680 or devices 670 via a coupling 682 and a coupling 672, respectively. For example, the communication components 664 may comprise a network interface component or another suitable device to interface with the network 680. In further examples, the communication components 664 may comprise wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 670 may be another machine or any of a wide variety of peripheral devices (e.g., coupled via a USB).

Moreover, the communication components 664 may detect identifiers or comprise components operable to detect identifiers. For example, the communication components 664 may comprise radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 664, such as location via Internet Protocol (IP) geolocation, location via Wi-Fi^{®} signal triangulation, location via detecting an NFC beacon signal that may indicate a particular location, and so forth.

The various memories (e.g., 630, 632, 634, and/or memory of the processor(s) 610) and/or the storage unit 636 may store one or more sets of instructions 616 and data structures (e.g., software) embodying or utilized by any one or more of the methodologies or functions described herein. These instructions (e.g., the instructions 616), when executed by the processor(s) 610, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to comprise, but not be limited to, solid-state memories, and optical and magnetic media, comprising memory internal or external to processors. Specific examples of machine-storage media, computer-storage media, and/or device-storage media comprise non-volatile memory, comprising by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 680 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 680 or a portion of the network 680 may comprise a wireless or cellular network, and the coupling 682 may be a Code Division Multiple Access (CDMA) connection, a Global System for Mobile communications (GSM) connection, or another type of cellular or wireless coupling. In this example, the coupling 682 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) comprising 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 616 may be transmitted or received over the network 680 using a transmission medium via a network interface device (e.g., a network interface component comprised in the communication components 664) and utilizing any one of a number of well-known transfer protocols (e.g., HTTP). Similarly, the instructions 616 may be transmitted or received using a transmission medium via the coupling 672 (e.g., a peer-to-peer coupling) to the devices 670. The terms "transmission medium" and "signal medium" mean the same thing and may be used interchangeably in this disclosure. The terms "transmission medium" and "signal medium" shall be taken to comprise any intangible medium that is capable of storing, encoding, or carrying the instructions 616 for execution by the machine 600, and comprise digital or analog communications signals or other intangible media to facilitate communication of such software. Hence, the terms "transmission medium" and "signal medium" shall be taken to comprise any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to comprise both machine-storage media and transmission media. Thus, the terms comprise both storage devices/media and carrier waves/modulated data signals.

## Claims

1. A system comprising:
at least one hardware processor; and
a non-tangible computer-readable medium storing instructions that, when executed by the at least one hardware processor, cause the at least one hardware processor to perform operations comprising:
receiving a request to perform a computer task, the request comprising an identification of a first software tool;
generating a first prompt comprising a set of instructions, a listing of a plurality of software tools, and the request;
sending the first prompt to a large language model (LLM);
receiving a first response from the LLM, the first response comprising an indication of a subset of the plurality of software tools in the listing;
executing the subset in the first response to obtain context regarding the request;
generating a second prompt comprising the set of instructions, the listing, the request, and the context;
sending the second prompt to the LLM; and
receiving the second response from the LLM.

2. The system of claim 1, wherein the computer task comprises generating computer code in an application development environment.

3. The system of claim 2, wherein the listing of the plurality of software tools comprises, for each software tool, a name, a description, and example syntax.

4. The system of claim 2 or 3, wherein at least one of the plurality of software tools in the listing is a function that returns a current location in computer code that is being edited by a user with the application development environment.

5. The system of any one of claims 1 to 4, wherein the indication of a subset comprises an indication of the first software tool.

6. The system of any one of claims 1 to 5, wherein the second response comprises a second indication of a second subset of the plurality of software tools in the listing, and wherein the operations further comprise:
executing the second subset to obtain second context regarding the request;
generating a third prompt comprising the set of instructions, the listing, the request, the context, and the second context;
sending the third prompt to the LLM;
receiving the third response from the LLM; and
utilizing the third response as a final response, based on a determination that the third response contains an indication that it is final.

7. The system of claim 6, wherein the request is received from an Application Development Environment and wherein the utilizing comprises sending the third response to the application development environment.

8. A method comprising:
receiving a request to perform a computer task, the request comprising an identification of a first software tool;
generating a first prompt comprising a set of instructions, a listing of a plurality of software tools, and the request;
sending the first prompt to a large language model (LLM);
receiving a first response from the LLM, the first response comprising an indication of a subset of the plurality of software tools in the listing;
executing the subset in the first response to obtain context regarding the request;
generating a second prompt comprising the set of instructions, the listing, the request, and the context;
sending the second prompt to the LLM; and
receiving the second response from the LLM.

9. The method of claim 8, wherein the computer task comprises generating computer code in an application development environment.

10. The method of claim 9, wherein the listing of the plurality of software tools comprises, for each software tool, a name, a description, and example syntax.

11. The method of claim 9 or 10, wherein at least one of the plurality of software tools in the listing is a function that returns a current location in computer code that is being edited by a user with the application development environment.

12. The method of any one of claims 8 to 11, wherein the indication of a subset comprises an indication of the first software tool.

13. The method of any one of claims 8 to 12,
wherein the second response comprises a second indication of a second subset of the plurality of software tools in the listing, and wherein the operations further comprise:
executing the second subset to obtain second context regarding the request;
generating a third prompt comprising the set of instructions, the listing, the request, the context, and the second context;
sending the third prompt to the LLM;
receiving the third response from the LLM; and
utilizing the third response as a final response, based on a determination that the third response contains an indication that it is final.

14. The method of claim 13, wherein the request is received from an Application Development Environment and wherein the utilizing comprises sending the third response to the application development environment.

15. A non-transitory machine-readable medium storing instructions which, when executed by one or more processors, cause the one or more processors to perform operations according to the method of any one of claims 8 to 14.
